# EUROPEAN PATENT APPLICATION

(11) **EP 3 364 634 A1**
(43) Date of publication of application: **22.08.2018**
(21) Application number: 17156322.4
(22) Date of filing: 15.02.2017
(51) Int. Cl.: H04L 29/12, H04L 12/751

(54) **RENEWING ADDRESS PARAMETERS OF A PAIRED DEVICE**

(71) Applicant: ABB Schweiz AG, 5400 Baden (CH)
(72) Inventor: PANG, Zhibo, 722 42 Västerås (SE); SCHMITT, Johannes, 68526 Ladenburg (DE); LAN, Dapeng, 114 17 Stockholm (SE); LIU, Yu, Zhenjiang (CN)
(74) Representative: Jin, Xiao-Hong

(57) **Abstract**

It is provided a method for renewing address parameters of a paired device of a communication network. The method is performed in an initiator device and comprises the steps of: determining that a current version of a set of network address records for the paired device is to be checked, wherein the current version of the set of network address records for the paired device is stored by the initiator device with an associated stored version indicator; transmitting an address query, the address query comprising an indicator of the paired device and the stored version indicator; receiving an updated set of network address records for the paired device when there is a set of network address records for the paired device with an associated version indicator which is newer than the stored version indicator; determining a set of recipient devices, the set of recipient devices being a strict subset of all devices of the communication network; and transmitting the updated set of network address records only to the set of recipient devices.

## Description

### TECHNICAL FIELD

The invention relates to a method, an initiator device, a computer program and a computer program product for renewing address parameters of a paired device.

### BACKGROUND

Long term reliability, also called availability, is one of the main challenges in the adoption of building automation networks, both when the communication is based on wireless and when based on wired technology like PLC (power line communication). Due to non-ideal signal propagation and various types of interference in the building network, the building automation network often suffers from frequent packet loss. One of the consequences of the packet loss is a device dropping its connection, i.e. a situation when the device is disconnected from the network. Any such loss in communication ability decreases the availability of building automation networks.

Existing networking technologies and standards such as WiFi, ZigBee, Bluetooth, Thread, HomePlug GreenPHY/AV/AV2, KNX, etc. allow the dropped device to rejoin the network. However, known methods, which allow the dropped device to rejoin the network, are unable to ensure that the rejoined device is reachable for other devices.

### SUMMARY

It is an object to allow a device, which rejoins a communication network, to allow continued communication with other devices in an efficient manner.

According to a first aspect, it is provided a method for renewing address parameters of a paired device of a communication network. The method is performed in an initiator device and comprises the steps of: determining that a current version of a set of network address records for the paired device is to be checked, wherein the current version of the set of network address records for the paired device is stored by the initiator device with an associated stored version indicator; transmitting an address query, the address query comprising an indicator of the paired device and the stored version indicator; receiving an updated set of network address records for the paired device when there is a set of network address records for the paired device with an associated version indicator which is newer than the stored version indicator; determining a set of recipient devices, the set of recipient devices being a strict subset of all devices of the communication network; and transmitting the updated set of network address records only to the set of recipient devices.

In the step of transmitting and address query, the address query may be transmitted to a network manager of the communication network.

In the step of transmitting and address query, the address query may be transmitted using multicast to a plurality of devices of the communication network.

In the step of determining, the determination may be based on that a certain time has passed since the most recent previous address query was transmitted.

In the step of determining, the determination may be based on that a quality indicator of communication with the paired device is worse than a threshold.

In the step of determining a set of recipient devices, the set of recipient devices may comprise any devices with routing capability being provided on a most direct path between the initiator device and the paired device.

In the step of determining a set of recipient devices, the set of recipient devices may comprise a network manager of the communication network.

In the step of determining a set of recipient devices, the set of recipient devices may comprise any devices with routing capability being provided on a most direct path between the initiator device and the network manager.

In the step of determining a set of recipient devices, the set of recipient devices may comprise a secondary routing set comprising any devices with routing capability being provided on a path between the initiator device and a paired device or the network manager.

The step of transmitting the updated set of network address records may comprise transmitting the updated set of network address records to the recipient devices of the secondary routing set after transmitting the updated set of network address records to other recipient devices.

The set of network address records may comprise at least one of a mesh local address, a routing locator, a mesh local prefix, router identifier, child identifier, mesh local endpoint identifier, random identifier and unique local address.

The communication network may be a building automation network.

According to a second aspect, it is provided an initiator device for renewing address parameters of a paired device of a communication network when the initiator device is part of a communication network. The initiator device comprises: a processor; and a memory storing instructions that, when executed by the processor, cause the initiator device to: determine that a current version of a set of network address records for the paired device is to be checked, wherein the current version of the set of network address records for the paired device is stored by the initiator device with an associated stored version indicator; transmit an address query, the address query comprising an indicator of the paired device and the stored version indicator; receive an updated set of network address records for the paired device when there is a set of network address records for the paired device with an associated version indicator which is newer than the stored version indicator; determine a set of recipient devices, the set of recipient devices being a strict subset of all devices of the communication network; and transmit the updated set of network address records only to the set of recipient devices.

According to a third aspect, it is provided a computer program for renewing address parameters of a paired device of a communication network when the initiator device is part of a communication network. The computer program comprises computer program code which, when run on an initiator device, causes the initiator device to: determine that a current version of a set of network address records for the paired device is to be checked, wherein the current version of the set of network address records for the paired device is stored by the initiator device with an associated stored version indicator; transmit an address query, the address query comprising an indicator of the paired device and the stored version indicator; receive an updated set of network address records for the paired device when there is a set of network address records for the paired device with an associated version indicator which is newer than the stored version indicator; determine a set of recipient devices, the set of recipient devices being a strict subset of all devices of the communication network; and transmit the updated set of network address records only to the set of recipient devices.

According to a fourth aspect, it is provided a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic drawing illustrating an environment of a communication network in which embodiments presented herein can be applied;
Fig 2 is a schematic drawing illustrating the environment of Fig 1 where recipient devices are highlighted in accordance with one embodiment;
Fig 3 is a flow chart illustrating embodiments of methods for transmitting address parameters of an initiator device of a communication network;
Fig 4 is a schematic diagram illustrating components of the initiator device of Figs 1 and 2 according to one embodiment; and
Fig 5 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

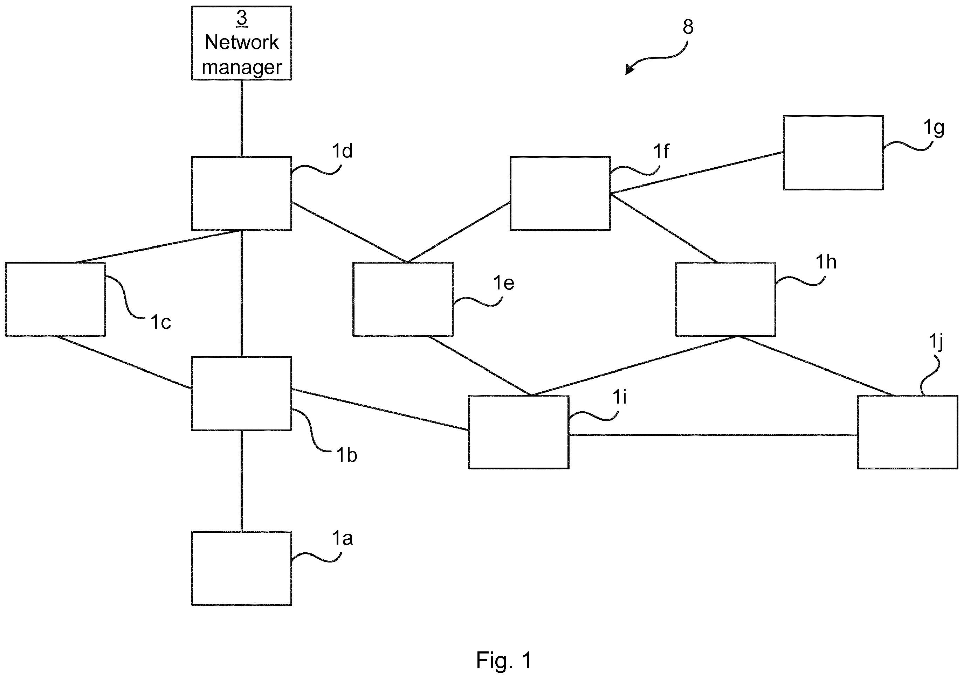

Fig 1 is a schematic drawing illustrating an environment of a communication network 8 in which embodiments presented herein can be applied. The communication network 8 is here a building automation network. The communication network 8 can comply with any suitable current or future communication standard, e.g. WiFi, ZigBee, Bluetooth, Thread, HomePlug (GreenPHY/AV/AV2), KNX, etc. The communication network can be of any suitable topology, including star topology, tree topology or mesh topology.

A network manager 3 can perform actions for managing the joining and rejoining process. For instance, the network manager can be a border router or a leader of routers of a Thread network, a system access point of a wire based network, a router or access point of a WiFi network, a network manager of a ZigBee network, or a master device of Bluetooth network.

In the example of Fig 1, the communication network 8 is a mesh network containing ten devices 1a-j and the network manager 3. The network manager 3 can be connected to a local area network (LAN) and/or an external network, such as the Internet.

In the communication network illustrated in Fig 1, the devices 1a-j form a mesh network. Each one of the devices 1a-j can be an end point device, for receiving and/or transmitting communication. Being a mesh network, each one of the devices 1a-j can also function as a router, i.e. forwarding communication to other devices and/or the network manager as needed.

For instance, if the first device 1a (being a light switch) is paired with the tenth device 1j (being a light connector), the communication between the first device 1a and the tenth device can pass through the second device 1b and the ninth device 1i. Alternatively, the communication can pass through the second device 1b, the fourth device 1d, the fifth device 1e, the sixth device 1f and the eighth device 1h.

As stated above, a device can on occasion lose its connection with the communication network 8, at which point the device rejoins the network. Every time the device rejoins the network, the network addresses or identities of one or more communication layers are reassigned, and may thus differ compared to before the connection was lost.

For example, the network manager 3 and the neighbouring device 1b of the first device 1a can create an updated network address record of the hardware ID, MAC (media access control) layer ID, network layer ID, transport layer ID, application layer ID, etc. This set of network address records can also be denoted Address Mapping Record (AMR). According to embodiments herein, an initiator device (which can be any device of the communication network 8) can query any paired device to thereby get any updated set of network address records. If there is an updated set of network address records, this is propagated to other devices, denoted recipient devices, which benefit from this.

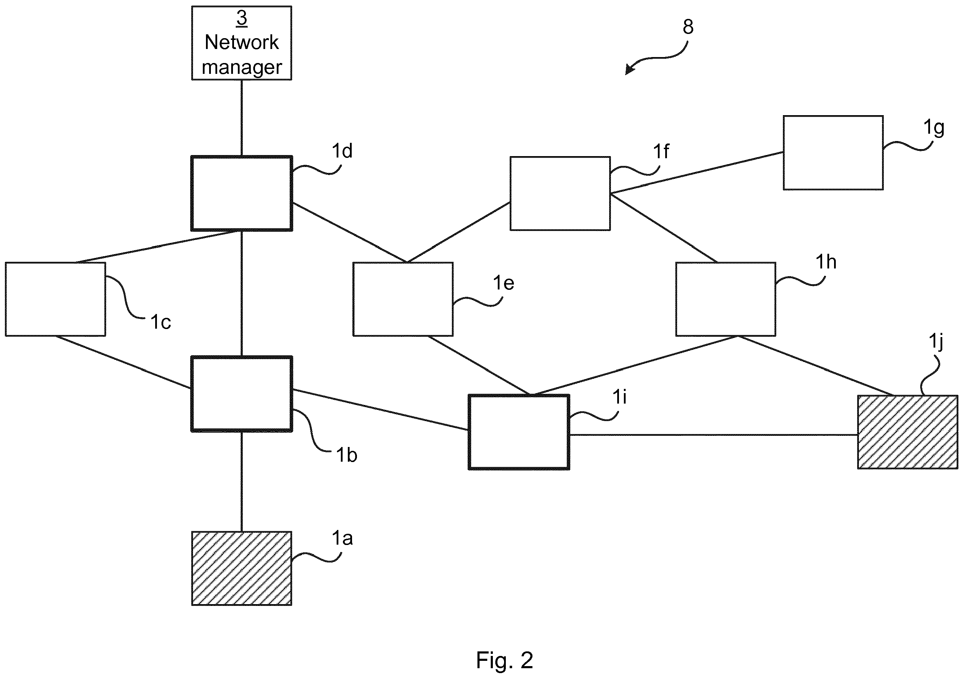

Fig 2 is a schematic drawing illustrating the environment of Fig 1 where recipient devices are highlighted in accordance with one embodiment. In this example, the first device 1a acts as an initiator device. It is to be noted that each one of the devices 1a-j and even the network manager 3 can also act as an initiator device to query a paired device for any address update.

Since the communication network 8 is here embodied as a mesh network, there are intermediate devices between the initiator device (the first device) 1a and the network manager 3, in this case the second device 1b and the fourth device 1d. In this example, the first device 1a is paired with the tenth device 1j (e.g. for a light/switch functionality). Hence, there are intermediate devices between the initiator device 1a and the tenth device 1j (to which the initiator device 1a is paired), in this case the second device 1b and the ninth device 1i. Hence, when determining a set of recipient devices for receiving the updated set of network address records, the set contains the network node 3, the tenth device 1j, as well as the intermediate devices 1b, 1d, 1i. The intermediate devices 1b, 1d, 1i are highlighted with bold borders in Fig 2.

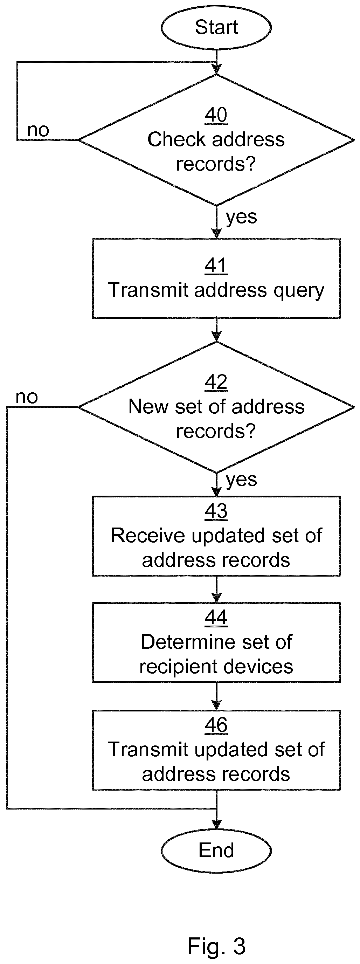

Fig 3 is a flow chart illustrating embodiments of methods for renewing address parameters of a paired device of a communication network. The method is performed by the initiator device.

In a conditional *check address records* step 40, the initiator device determines if a current version of a set of network address records for the paired device is to be checked. The current version of the set of network address records for the paired device is stored by the initiator device with an associated stored version indicator. When the current version of a set of network address records for the paired device is to be checked, the method proceeds to a *transmit address query* step 41. Otherwise, the method performs the *check address records* step 40 again, optionally after a delay. In one embodiment, the determination is based on that a certain time has passed since the most recent previous address query was transmitted. In other words, a polling is performed.

In one embodiment, the determination is based on that a quality indicator of communication with the paired device is worse than a threshold. The quality indicator can e.g. be number of lost packets.

In the *transmit address query* step 41, an address query is transmitted. The address query comprises an indicator of the paired device and the stored version indicator. The indicator of the paired device can e.g. be one or more of the network address records of the set of network address records for the paired device stored by the initiator device. The version indicator can e.g. be a version number.

In one embodiment, the address query is transmitted to a network manager of the communication network.

In one embodiment, the address query is transmitted using multicast to a plurality of devices of the communication network.

The address query is received by a receiving device in the communication network (e.g. the network manager or other any other device in the communication network). The receiving device obtains its version indicator associated with the set of network address records for the paired device. At this stage, the receiving device can compare its version indicator with the version indicator of the address query. If its version indicator indicates a later version, this implies that the initiator device has an old set of network address records for paired device. If this is the case, the device thus sends its set of network address records to the paired device to the initiator device, to allow the initiator device to update its set of address records for the paired device.

In a conditional *new set of address records* step 42, it is determined when there is a set of network address records for the paired device with an associated version indicator which is newer than the stored version indicator. In this case, the method proceeds to a receive updated set of address records step 43 to receive the updated set of network address records. Otherwise, the method ends (or returns to the conditional *check address records* step 40).

In the *receive updated set of address records* step 43, an updated set of network address records for the paired device is received.

In a *determine set of recipient devices* step 44, a set of recipient devices is determined. The set of recipient devices is a strict subset of all devices of the communication network. In one embodiment, the set of recipient devices comprises any devices with routing capability being provided on a most direct path between the initiator device and the paired device (see 1b and 1i of Fig 2).

In one embodiment, the set of recipient devices comprises a network manager of the communication network (see 3 of Fig 2). In one embodiment, the set of recipient devices comprises any devices with routing capability being provided on a most direct path between the initiator device and the network manager (see 1b and 1d of Fig 2).

In one embodiment, the set of recipient devices comprises a secondary routing set comprising any devices with routing capability being provided on a path between the initiator device and a paired device or the network manager.

In a *transmit updated set of address records* step 46, the updated set of network address records is transmitted only to the set of recipient devices. In one embodiment, the updated set of network address records are transmitted to the recipient devices of the secondary routing set after transmitting the updated set of network address records to other recipient devices, optionally after a delay.

The method may repeat, i.e. the method returns to the conditional *check address records* step 40 after the *transmit updated set of address records* step 46.

Using this method, the initiator device not only ensures it obtains updated network address records for paired devices when needed, but the initiator device also informs the recipient devices of the updated network address records, effectively reducing the communication needed to propagate updated network address records in the communication network.

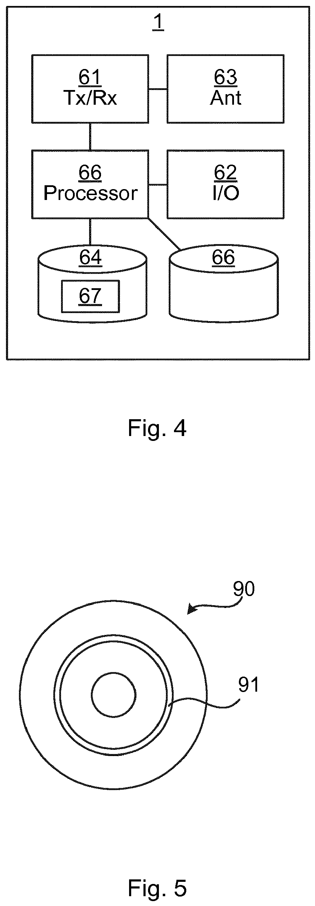

Fig 4 is a schematic diagram illustrating components of the initiator device of Figs 1 and 2 according to one embodiment. The initiator device can be any of the devices of the communication network of Figs 1 and 2. A processor 60 is provided using any combination of one or more of a suitable central processing unit (CPU), multiprocessor, microcontroller, digital signal processor (DSP), application specific integrated circuit etc., capable of executing software instructions 67 stored in a memory 64, which can thus be a computer program product. The processor 60 can be configured to execute the method described with reference to Fig 3 above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 66 is also provided for reading and/or storing data during execution of software instructions in the processor 60. The data memory 66 can be any combination of read and write memory (RAM) and read only memory (ROM).

The initiator device 1 further comprises an I/O interface 62 for communicating with other external entities. Optionally, the I/O interface 62 also includes a user interface.

Optionally, a transceiver 61 comprises suitable analogue and digital components to allow signal transmission and signal reception with a wireless device using one or more antennas 63.

Other components of the initiator device 1 are omitted in order not to obscure the concepts presented herein.

Fig 5 shows one example of a computer program product comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Fig 4. While the computer program 91 is here schematically shown as a track on the depicted optical disk, the computer program can be stored in any way which is suitable for the computer program product, such as a removable solid state memory, e.g. a Universal Serial Bus (USB) drive.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for renewing address parameters of a paired device (1j) of a communication network (8), the method being performed in an initiator device (1, 1a) and comprising the steps of:
determining (40) that a current version of a set of network address records for the paired device is to be checked, wherein the current version of the set of network address records for the paired device is stored by the initiator device with an associated stored version indicator;
transmitting (41) an address query, the address query comprising an indicator of the paired device (1j) and the stored version indicator;
receiving (43) an updated set of network address records for the paired device when there is a set of network address records for the paired device with an associated version indicator which is newer than the stored version indicator;
determining (44) a set of recipient devices, the set of recipient devices being a strict subset of all devices of the communication network (8); and
transmitting (46) the updated set of network address records only to the set of recipient devices.

2. The method according to claim 1, wherein, in the step of transmitting (41) and address query, the address query is transmitted to a network manager (3) of the communication network (8).

3. The method according to claim 1 or 2, wherein, in the step of transmitting (41) and address query, the address query is transmitted using multicast to a plurality of devices of the communication network (8).

4. The method according to any one of the preceding claims, wherein, in the step of determining (40), the determination is based on that a certain time has passed since the most recent previous address query was transmitted.

5. The method according to any one of the preceding claims, wherein, in the step of determining (40), the determination is based on that a quality indicator of communication with the paired device (1j) is worse than a threshold.

6. The method according to any one of the preceding claims, wherein in the step of determining (44) a set of recipient devices, the set of recipient devices comprises any devices with routing capability being provided on a most direct path between the initiator device (1, 1a) and the paired device.

7. The method according to any one of the preceding claims, wherein in the step of determining (44) a set of recipient devices, the set of recipient devices comprises a network manager (3) of the communication network (8).

8. The method according to claim 4, wherein in the step of determining (44) a set of recipient devices, the set of recipient devices comprises any devices with routing capability being provided on a most direct path between the initiator device (1, 1a) and the network manager (3).

9. The method according to any one of the preceding claims, wherein in the step of determining (44) a set of recipient devices, the set of recipient devices comprises a secondary routing set comprising any devices with routing capability being provided on a path between the initiator device (1, 1a) and a paired device or the network manager.

10. The method according to claim 9, wherein the step of transmitting (46) the updated set of network address records comprises transmitting the updated set of network address records to the recipient devices of the secondary routing set after transmitting the updated set of network address records to other recipient devices.

11. The method according to any one of the preceding claims, wherein the set of network address records comprises at least one of a mesh local address, a routing locator, a mesh local prefix, router identifier, child identifier, mesh local endpoint identifier, random identifier and unique local address.

12. The method according to any one of the preceding claims, wherein the communication network (8) is a building automation network.

13. An initiator device (1, 1a) for renewing address parameters of a paired device (1j) of a communication network (8) when the initiator device (1, 1a) is part of a communication network (8), the initiator device (1, 1a) comprising:
a processor (60); and
a memory (64) storing instructions (67) that, when executed by the processor, cause the initiator device (1, 1a) to:
determine that a current version of a set of network address records for the paired device is to be checked, wherein the current version of the set of network address records for the paired device is stored by the initiator device with an associated stored version indicator;
transmit an address query, the address query comprising an indicator of the paired device (1j) and the stored version indicator;
receive an updated set of network address records for the paired device when there is a set of network address records for the paired device with an associated version indicator which is newer than the stored version indicator;
determine a set of recipient devices, the set of recipient devices being a strict subset of all devices of the communication network (8); and
transmit the updated set of network address records only to the set of recipient devices.

14. A computer program (67, 91) for renewing address parameters of a paired device (1j) of a communication network (8) when the initiator device (1, 1a) is part of a communication network (8), the computer program comprising computer program code which, when run on an initiator device (1, 1a), causes the initiator device (1, 1a) to:
determine that a current version of a set of network address records for the paired device is to be checked, wherein the current version of the set of network address records for the paired device is stored by the initiator device with an associated stored version indicator;
transmit an address query, the address query comprising an indicator of the paired device (1j) and the stored version indicator;
receive an updated set of network address records for the paired device when there is a set of network address records for the paired device with an associated version indicator which is newer than the stored version indicator;
determine a set of recipient devices, the set of recipient devices being a strict subset of all devices of the communication network (8); and
transmit the updated set of network address records only to the set of recipient devices.

15. A computer program product (64, 90) comprising a computer program according to claim 14 and a computer readable means on which the computer program is stored.
